# FASCICULE DE BREVET EUROPEEN

(11) **EP 2 545 760 B1**
(45) Date de publication et mention de la délivrance du brevet: **18.06.2014**
(21) Numéro de dépôt: 12174396.7
(22) Date de dépôt: 29.06.2012
(51) Int. Cl.: A01D 34/86, A01D 75/18

(54) **Faucheuse-débroussailleuse comportant des moyens élastiques permettant un déplacement angulaire du bras portant l'outil de coupe**
Mäh-Häcksler, der mit elastischen Mitteln ausgestattet ist, die eine Winkelverschiebung des mit dem Schneidwerkzeug ausgestatteten Arms ermöglicht
Mower-brush cutter comprising an elastic means allowing angular movement of the arm supporting the cutting tool

(30) Priorité: 15.07.2011 FR 1156451
(43) Date de publication de la demande: 16.01.2013
(73) Titulaire: Noremat, 54710 Ludres (FR)
(72) Inventeur: Berné, Stéphane, 54116 Tantonville (FR)
(74) Mandataire: Loyer & Abello

(56) Documents cités:
- FR-A1- 2 614 496
- FR-A1- 2 856 884
- FR-A1- 2 874 475
- GB-A- 2 435 802
- US-A- 5 220 773
- US-A- 5 341 629

## Description

L'invention est relative à une faucheuse-débroussailleuse du type comportant un bâti sur lequel est articulé un bloc d'orientation portant un bras mobile à l'extrémité duquel est disposé l'outil de broyage.

Dans le brevet français 2.874.475 du 2 septembre 2004 on a décrit une telle faucheuse-débrousailleuse comportant un bâti sur lequel est articulé un bloc d'orientation, commandé par un vérin d'orientation supportant, à rotation autour d'un axe, un bras portant une tête de travail caractérisé par le fait que la machine comporte un support du vérin d'orientation, précontraint en position, et susceptible de pivoter lorsque le bras porteur ou la tête de travail rencontre un obstacle lors du recul de la machine ; de manière à autoriser un escamotage vers l'avant : du vérin d'orientation, du bras et de la tête de travail.

Il s'est avéré à l'usage que la disposition décrite audit brevet 2.874.475 présente un inconvénient.

En effet, dans cette disposition, le vérin d'orientation du bloc d'orientation se trouve en pleine extension lorsque l'outil de broyage est en position de travail. Il en résulte que la tige de ce vérin étant entièrement sortie du vérin n'est plus aussi solidement maintenue par son cylindre, alors qu'elle peut être soumise à de fortes vibrations et autres sollicitations, ce qui peut avoir pour conséquence que ledit vérin se détériore à l'usage.

D'autre part ce système ne marche que dans un seul sens, c'est-à-dire que si, par mégarde, l'outil de travail ou le bras qui le porte heurte un obstacle en marche avant, il peut se produire une rupture du vérin d'orientation.

Dans le brevet US5220773 il est décrit un dispositif comportant un châssis sur lequel est monté pivotant autour d'un axe vertical un bras, ledit bras supportant des outils de coupe. Dans un état déployé des outils de coupe, la tige du vérin commandant le pivotement autour de l'axe vertical du bras supportant les outils de coupe est rétractée dans le cylindre du vérin. Cependant, ce dispositif ne marche également que dans un seul sens.

La présente invention a pour but de supprimer au moins certains de ces inconvénients.

La machine faucheuse-débroussailleuse selon la présente invention est du type comportant un bâti sur lequel est monté à rotation autour d'un axe vertical un bloc porteur sur lequel est articulé un bras portant l'outil de coupe à son extrémité, la rotation dudit bloc porteur autour de son axe vertical pour amener ledit bras de sa position de transport à sa position de travail étant commandée par un vérin, ledit vérin est disposé de façon que sa tige soit en extension hors de son cylindre pour le transport et en position rétractée dans son cylindre en position de travail, caractérisée par le fait que la liaison entre la tige du vérin et le bloc porteur étant réalisée par un moyen élastique, ce qui permet un déplacement angulaire dudit bloc dans un sens ou dans l'autre.

La présente invention peut, en outre, comporter tout ou partie des dispositions suivantes prises séparément ou en combinaison.
a) Le vérin d'orientation est porté par un support pouvant librement pivoter autour d'un axe vertical.
b) Le moyen élastique est un ressort hélicoïdal à spires non jointives ; de façon à pouvoir travailler en compression ou en extension.
c) Le moyen élastique est une masse de matériau élastique pouvant se déformer aussi bien en compression qu'en extension.
d) Le moyen élastique est logé à l'intérieur du bloc porteur.
e) La masse en matière élastique est cylindrique, disposée à l'intérieur d'un logement cylindrique ménagé à l'intérieur du bloc porteur et est fixée d'une part au fond de son logement ; d'autre part à la tige du vérin.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
La figure 1 représente schématiquement une vue de dessus d'une machine selon l'invention en cours de recul.
La figure 2 est une vue de détail représentant le bloc porteur, articulé sur un élément du bâti, en position de transport.
La figure 3 est une vue correspondant à la figure 2, avec coupe partielle, le bloc porteur étant en position de travail.
La figure 4 représente les pièces de la figure 3 en déplacement angulaire suite à la rencontre d'un obstacle en reculant.

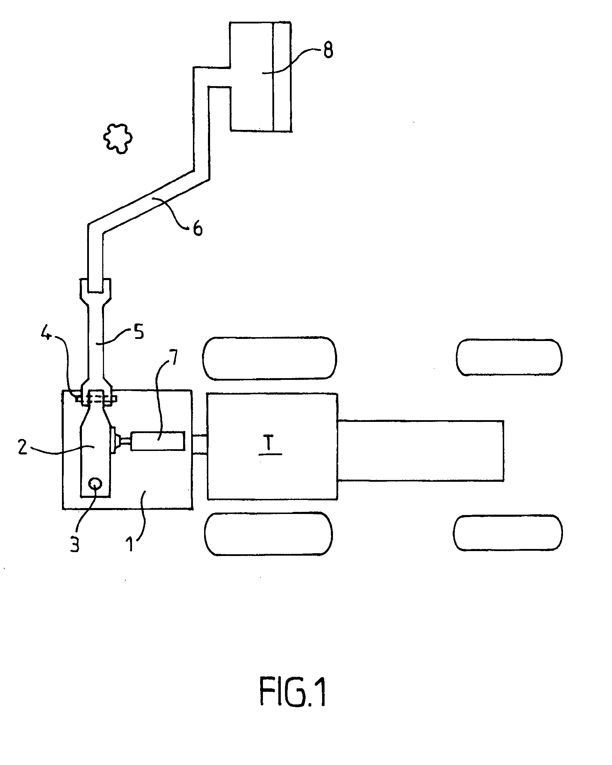

La figure 1 est une vue schématique. Elle représente un tracteur T portant un bâti 1 sur lequel un bloc porteur 2 est monté à rotation autour d'un axe vertical 3.

Sur le bloc porteur 2 est articulé, autour un axe horizontal 4, un bras en deux parties 5, 6 à l'extrémité duquel est fixé un outil de coupe 8.

L'orientation du bloc porteur 2 est commandée par un vérin 7.

Lorsque l'outil 8 est en position de travail, comme cela est représenté à la figure 1, le vérin est rétracté, c'est-à-dire que la tige du vérin 7 est dans son cylindre. Pour le transport le bras 5,6 est relevé et le vérin 7 fait pivoter le bloc porteur vers l'arrière.

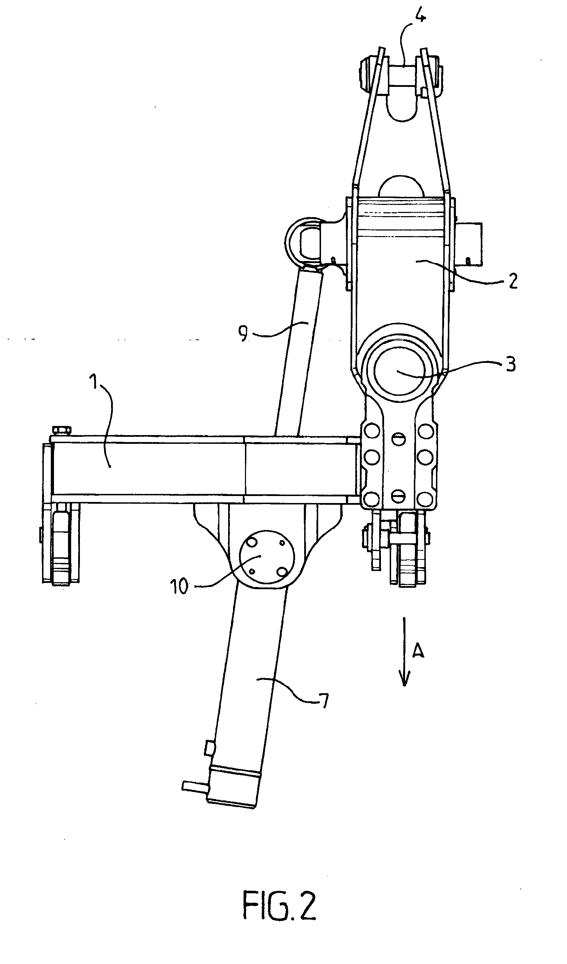

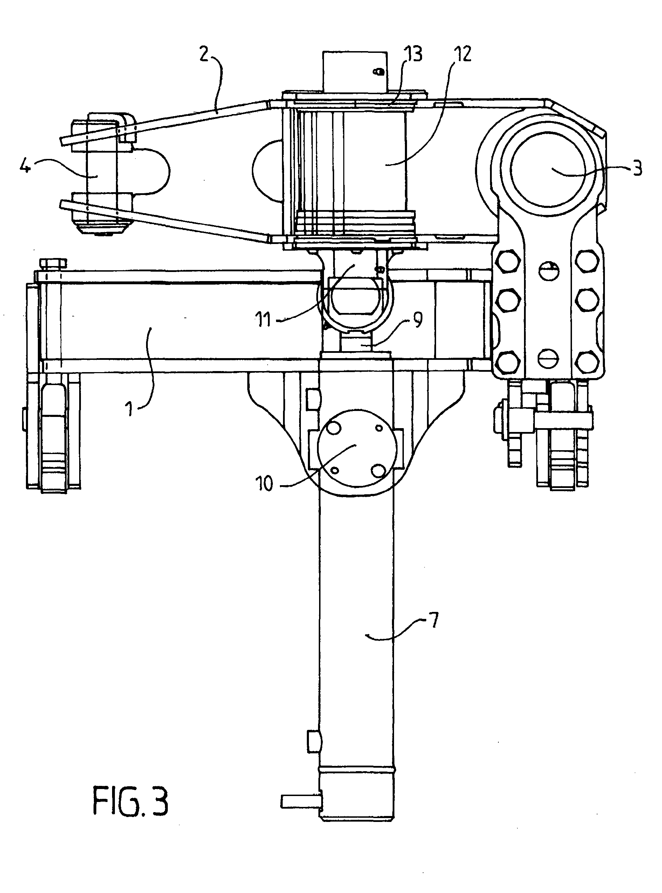

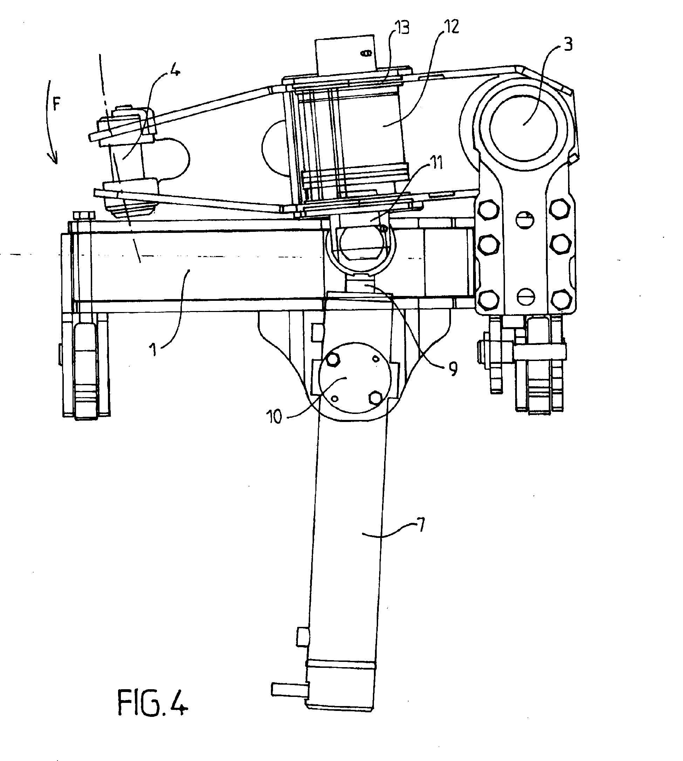

Les figures 2, 3 et 4 sont des vues de détail d'un exemple de réalisation de l'invention, les figures 3 et 4 étant des coupes partielles.

La figure 2 représente les pièces en position de transport. L'élément de bâti 1 porte un axe vertical 3 sur lequel est articulé le bloc porteur 2, qui est muni d'un axe horizontal 4, lequel porte le bras 5, 6 portant l'outil 8, ce bras et l'outil qu'il porte n'étant pas représentés. La tige 9 du vérin 7 est entièrement sortie ; de sorte que le bloc porteur 2 et le bras qu'il porte sont orientés vers l'arrière par rapport à la direction d'avancement A.

La figure 3 représente les éléments de la figure 2 en position de travail. Dans cette position la tige 9 du vérin 7 est entièrement rentrée dans son cylindre, le bloc a pivoté de 90° et le bras porteur de l'outil, articulé autour de l'axe horizontal 4 est en position de travail. Pour permettre cette rotation du bloc 2 le vérin 7 est monté à pivotement sur un axe 10, porté par le bâti 1.

L'extrémité de la tige 9 du vérin 7 est reliée à une chape 11, qui est fixée à un cylindre en caoutchouc 12, lui-même fixé à son autre extrémité à une pièce circulaire 13 fixée à la paroi du bloc 2.

La figure 4 illustre le fonctionnement du dispositif selon la présente invention, lorsque le bras ou l'outil porté par le bras heurte un obstacle en reculant.

Le bloc 2 a pivoté selon le flèche F. La tige 9 du vérin 7 étant complètement rentrée dans son cylindre ne peut pas s'enfoncer ; de sorte que le cylindre en caoutchouc 12 est écrasé.

On obtient ainsi un déplacement angulaire du bras portant l'outil, déplacement qui est élastique. Les pièces reviennent à la position de la figure 3 lorsque l'obstacle n'est plus présent.

La tige 9 du vérin 7 ne peut pas être détériorée, parce que elle est complètement rétractée en position de travail.

La présente invention présente un avantage supplémentaire, qui est qu'elle permet un déplacement angulaire dans les deux sens.

En effet le cylindre en caoutchouc 12 étant fixé à son autre extrémité à une plaque 13 elle-même fixée à la paroi du bloc 2 peut travailler non seulement en compression, comme dans le cas de la figure 4, mais aussi en extension. Il en résulte que le bloc 2 peut pivoter en sens inverse de la flèche F, ce qui permet un déplacement angulaire lorsque le bras ou l'outil heurte un obstacle en marche avant.

Dans l'exemple représenté aux figures 3 et 4 le moyen élastique est constitué par une masse élastique, en caoutchouc, mais il est bien évident que l'invention n'est pas limitée à l'emploi de cette matière.

De même le moyen élastique peut être constitué par un ressort hélicoïdal à spires non jointives de façon à pouvoir travailler aussi bien en compression qu'en extension.

Le déplacement angulaire du bloc porteur 2 est, dans l'exemple représenté, de l'ordre de 5°, ce qui entraine un déplacement angulaire du bras 5,6 portant l'outil de coupe 8 suffisamment important pour éviter une rupture et cela que ce déplacement ait lieu dans un sens ou dans l'autre.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » pour un élément n'exclut pas, sauf mention contraire, la présence d'une pluralité de tels éléments.

Dans les revendications, tout signe de référence entre parenthèses ne saurait être interprété comme une limitation de la revendication.

## Revendications

1. Machine faucheuse-débroussailleuse du type comportant un bâti (1) sur lequel est monté à rotation autour d'un axe vertical (3) un bloc porteur (2) sur lequel est articulé un bras (5,6) portant l'outil de coupe (8) à son extrémité, la rotation du bloc porteur (2) autour de son axe vertical (3) pour amener ledit bras (5,6) de sa position de transport à sa position de travail étant commandée par un vérin (7), ledit vérin est disposé de façon que sa tige (9) soit en extension hors de son cylindre pour la transport et en position rétractée dans son cylindre en position de travail, **caractérisée par le fait que** la liaison entre la tige (9) du vérin (7) et le bloc porteur (2) étant réalisée par un moyen élastique, ce qui permet un déplacement angulaire dudit bloc porteur (2) dans un sens ou dans l'autre.

2. Machine selon la revendication 1, dans laquelle le moyen élastique est une masse de matériau élastique (12) pouvant se déformer aussi bien en compression qu'en extension.

3. Machine selon la revendication 2, dans laquelle la masse en matière élastique (12) est cylindrique et est fixée d'une part à la paroi du bloc porteur (2) et d'autre part à la tige du vérin (7).

4. Machine selon la revendication 1, dans laquelle le moyen élastique est un ressort hélicoïdal à spires non jointives ; de façon à pouvoir travailler en compression ou en extension.

5. Machine selon l'une des revendications 1 à 4, dans laquelle le vérin (7) est porté par un support pouvant librement pivoter autour d'un axe vertical (10).

6. Machine selon l'une des revendications 1 à 5, dans laquelle le moyen élastique est disposé à l'intérieur du bloc porteur (2).

## Patentansprüche

1. Mäh- und Freischneidemaschine von dem Typ, umfassend ein Gestell (1), auf dem in Rotation um eine vertikale Achse (3) ein Trägerblock (2) montiert ist, auf dem ein Arm (5, 6) artikuliert ist, der das Schneidwerkzeug (8) an seinem Ende trägt, wobei die Rotation des Trägerblocks (2) um seine vertikale Achse (3) durch eine Spindel (7) gesteuert ist, um den genannten Arm (5, 6) von seiner Transportposition in seine Arbeitsposition zu bringen, wobei die genannte Spindel derart angeordnet ist, dass sich ihre Stange (9) für den Transport in Erweiterung außerhalb ihres Zylinders und in eingezogener Position in ihrem Zylinder in der Arbeitsposition befindet, **gekennzeichnet durch** die Tatsache, dass die Verbindung zwischen der Stange (9) der Spindel (7) und dem Trägerblock (2) **durch** ein elastisches Mittel realisiert ist, was eine winkelförmige Verschiebung des genannten Trägerblocks (2) in der einen oder der anderen Richtung erlaubt.

2. Maschine gemäß Anspruch 1, bei der das elastische Mittel eine Masse aus elastischem Material (12) ist, das sich sowohl in der Komprimierung als auch in der Erweiterung verformen kann.

3. Maschine gemäß Anspruch 2, bei der die Masse aus elastischem Material (12) zylindrisch ist und einerseits an der Wand des Trägerblocks (2) und andererseits an der Stange der Spindel (7) befestigt ist.

4. Maschine gemäß Anspruch 1, bei der das elastische Mittel eine schneckenförmige Feder mit Windungen ohne Verbindung derart ist, dass in Komprimierung oder in Erweiterung gearbeitet werden kann.

5. Maschine gemäß Anspruch 1 bis 4, bei der die Spindel (7) durch einen Träger getragen ist, der frei um eine vertikale Achse (10) drehen kann.

6. Maschine gemäß Anspruch 1 bis 5, bei der das elastische Mittel im Innern des Trägerblocks (2) angeordnet ist.

## Claims

1. A mowing machine of the brush cutter type comprising a frame (1) on which is rotatably mounted around a vertical axis (3), a support block (2),on which is articulated an arm (5, 6) carrying the cutting tool (8) at its end, with the rotation of the support lock (2) about its vertical axis (3) causing the said arm (5, 6) to be moved from its carrying position to its working position being controlled by a jack (7), which is arranged in such a way that its rod (9) is either extended out of its cylinder for transportation or retracted into its cylinder in a working position, **characterised in that** the connection between the rod (9) of the cylinder (7) and the support block(2) is formed by an elastic means which allows an angular movement of the said support block(2).

2. Machine according to the preceding Claim 1, wherein the resilient means is a mass of elastic material, which is deformable in both compression and extension, thus allowing an angular displacement of the support bar (2) in one direction or the other.

3. Machine according to the preceding Claim 2, wherein the mass of elastic material (12) is cylindrical and is fixed at one end to the wall of the support block (2) and at the other to the rod of the jack (7).

4. Machine according to the preceding Claim 1, wherein the resilient means is a helical spring with non-contiguous turns in such a way that it can work in extension or in compression.

5. Machine according to any of the preceding Claims 1 to 4, wherein the jack (7) is carried by a support, which can pivot freely around a vertical axis (10).

6. Machine according to any of the preceding Claims 1 to 5, wherein the resilient means is disposed within the support block (2).
